# EUROPÄISCHE PATENTSCHRIFT

(11) **EP 3 589 914 B1**
(45) Veröffentlichungstag und Bekanntmachung des Hinweises auf die Patenterteilung: **07.04.2021**
(21) Anmeldenummer: 18706991.9
(22) Anmeldetag: 19.02.2018
(51) Int. Cl.: G01B 7/14, B60G 17/00

(54) **STEUERGERÄT FÜR EIN FAHRZEUG SOWIE FAHRZEUG MIT EINEM DERARTIGEN STEUERGERÄT**
CONTROL UNIT FOR A VEHICLE AS WELL AS VEHICLE WITH SUCH A CONTROL UNIT
APPAREIL DE COMMANDE POUR UN VEHICULE AINSI QUE VEHICULE AVEC UN TEL APPAREIL DE COMMANDE

(30) Priorität: 03.03.2017 DE 102017002061
(43) Veröffentlichungstag der Anmeldung: 08.01.2020
(73) Patentinhaber: WABCO GmbH, 30453 Hannover (DE)
(72) Erfinder: GRÖGER, Jens, 30163 Hannover (DE)
(74) Vertreter: Rabe, Dirk-Heinrich
(86) Internationale Anmeldenummer: PCT/EP2018/053977
(87) Internationale Veröffentlichungsnummer: WO 2018/158095

(56) Entgegenhaltungen:
- EP-A1- 2 755 039
- EP-B1- 2 846 128
- WO-A2-2009/138687
- DE-A1- 10 114 504
- DE-A1-102007 001 573
- DE-A1-102014 216 246
- US-A1- 2001 005 803

## Beschreibung

Die Erfindung betrifft ein Steuergerät für ein Fahrzeug, insbesondere Nutzfahrzeug, sowie ein Fahrzeug mit einem derartigen Steuergerät.

Zum Erfassen von fahrdynamischen Parametern eines Fahrzeuges können eine Vielzahl von Sensoren bzw. Sensormodulen vorgesehen sein. Die Sensoren messen hierbei insbesondere sich während der Fahrt des Fahrzeuges bewegende und verstellbare Komponenten und geben die gemessenen Daten über Signale an Steuergeräte eines oder mehrerer Regelsysteme im Fahrzeug aus, die diese für unterschiedliche Anwendungen weiterverarbeiten. So kann an einer Fahrzeugachse ein Drehzahlsensor vorgesehen sein, um das Drehverhalten eines Rades an dieser Fahrzeugachse zu erfassen und beispielsweise im Rahmen einer Blockierverhinderung auf das erfasste Drehverhalten entsprechend zu reagieren. Weiterhin können Fahrhöhensensoren verwendet werden, um eine relative Lage eines Chassis des Fahrzeuges zu der Fahrzeugachse des Fahrzeuges zu ermitteln. Beide beispielhaft genannten Sensoren bzw. Komponenten dieser Sensoren sind an der Fahrzeugachse des Fahrzeuges angeordnet, um die jeweiligen fahrdynamischen Parameter erfassen zu können.

Beispielhaft ist ein derartiger Drehzahlsensor in DE 10 2014 013 356 A1 beschrieben, wobei der Drehzahlsensor an einer Position, an der das Drehverhalten des jeweiligen Rades erfasst werden kann, fest mit der Fahrzeugachse verbunden ist. Im Drehzahlsensor ist dazu beispielsweise ein mit der Fahrzeugachse fest verbundener Hall-Sensor vorgesehen, der eine Drehbewegung eines sich mit dem entsprechenden Rad mitdrehenden Impulsrades detektieren kann. Darüber kann dann das Drehverhalten des jeweiligen Rades berechnet werden.

In EP 2 846 128 B1 ist beispielhaft ein Fahrhöhensensor gezeigt, der ein fest mit dem Chassis verbundenes Chassismodul und ein fest mit der Fahrzeugachse verbundenes Achsmodul aufweist, zwischen denen ein Abstand berührungslos gemessen werden kann. Dazu wird von einer Sendespule im Chassismodul ein niederfrequentes Magnetfeld erzeugt, das von einer Empfängerspule im Achsmodul abgetastet wird. Die in der Empfängerspule infolge des Wechselfeldes erzeugte Induktionsspannung ist ein Maß für die an der Empfängerspule noch wirkende Empfänger-Feldstärke, die wiederum unter Kenntnis der ursprünglichen Sende-Feldstärke an der Sendespule ein Maß für den Abstand zwischen Sendespule und Empfängerspule ist. Dieses Maß für den Abstand kann zur Weiterverarbeitung im Fahrzeug über eine hochfrequente Funkverbindung drahtlos an das Chassismodul übertragen werden.

Um in beiden Sensorausführungen eine Messung des jeweiligen fahrdynamischen Parameters bewerkstelligen zu können, sind insbesondere die mit der Fahrzeugachse fest verbundenen Sensorkomponenten bzw. Sensormodule über Versorgungsanschlüsse mit Energie zu versorgen, da jeweils aktiv betriebene Komponenten vorliegen. Dies kann wie in EP 2 846 128 B1 beschrieben beispielsweise über eine im Achsmodul integrierte Batterie oder einen Akku gewährleistet werden, die allerdings nur eine begrenzte Haltbarkeit und Temperaturbeständigkeit aufweisen.

Weiterhin kann das in DE 10 2014 013 356 A1 mit der Fahrzeugachse fest verbundene Sensormodul von einer mit dem Chassis fest verbundenen Energieversorgungseinheit mit Energie versorgt werden, wobei dazu eine entsprechende Versorgungsleitung vom Chassis zu dem mit der Fahrzeugachse fest verbundenen Sensormodul zu legen ist. Durch die häufige Bewegung zwischen dem Chassis und der Fahrzeugachse während des Fahrbetriebes ist eine Versorgungsleitung zu verwenden, die über eine große Zeitdauer trotz häufiger Bewegungen ihre Leitfähigkeit im Wesentlichen beibehält.

Die Energieversorgung von zwei oder auch mehreren derartigen an der Fahrzeugachse befestigten Sensormodulen erfolgt somit ausgehend von einer jedem Sensormodul individuell zugeordneten Energieversorgungseinheit, z.B. in einem Steuergerät, über eine Versorgungsleitung für jedes Sensormodul separat, auch wenn beide Sensormodule an derselben Fahrzeugachse befestigt sind. Dadurch wird der Aufwand zur Übertragung von Energie auf die Fahrzeugachse erhöht.

DE 101 14 504 A1 zeigt ein Verfahren zur Übertragung von Daten von wenigstens einem Sensor zu einem Steuergerät über eine Zweidrahtleitung mit Stromamplitudenmodulation.

US 2001/0005803 A1 zeigt ein Kontrollsystem für eine Aufhängung eines mindestens eine druckmittelführende Höheneinstellvorrichtung und einen Lagesensor aufweisenden Fahrzeugs.

Es ist daher Aufgabe der Erfindung, ein Fahrzeug mit einem Steuergerät bereitzustellen, mit denen in einfacher Weise eine sichere und kostengünstige Energieversorgung von Sensormodulen an einer Fahrzeugachse gewährleistet werden kann.

Diese Aufgabe wird durch ein Fahrzeug nach Anspruch 1 gelöst. Bevorzugte Weiterbildungen sind in den Unteransprüchen angegeben.

Erfindungsgemäß ist demnach vorgesehen, über eine in einem Steuergerät in einem Fahrzeug angeordnete Energieversorgungseinheit gleichzeitig mindestens zwei Sensormodule mit Energie zu versorgen, wobei die mindestens zwei Sensormodule mit einer der Fahrzeugachsen des Fahrzeuges fest verbunden sind.

Dadurch kann bereits der Vorteil erreicht werden, dass nicht jedes der an der Fahrzeugachse angeordneten Sensormodule von unterschiedlichen Energieversorgungseinheiten mit Energie zu versorgen ist, sondern vielmehr eine bereits vorhandene Energieversorgungseinheit in einem Steuergerät, beispielsweise einem Brems-Steuergerät zum Ansteuern von Bremsen des Fahrzeuges oder einem Niveauregel-Steuergerät zum Ansteuern einer Luftfederanlage zum Heben oder Senken eines Chassis des Fahrzeuges, gleichzeitig für die Energieversorgung von mehreren an der Fahrzeugachse befestigten Sensormodulen vorgesehen sein kann. Dadurch können insbesondere Bauteile bzw. Verkabelungsaufwand gespart werden.

Die an der Fahrzeugachse befestigten Sensormodule sind hierbei beispielsweise ein Drehzahlsensor zur Messung eines Drehverhaltens eines Rades an der Fahrzeugachse oder ein Achsmodul eines Fahrhöhensensors, insbesondere eines berührungslosen RF-Fahrhöhensensors, zur Messung einer einen Abstand zwischen dem Chassis und der Fahrzeugachse des Fahrzeuges charakterisierenden Größe oder ein Beschleunigungssensor.

Hierdurch wird vorteilhafterweise erkannt, dass über ein einer bestimmten Steuerungsfunktion im Fahrzeug zugeordnetes Steuergerät, das eine Energieversorgungseinheit aufweist, nicht gezwungenermaßen lediglich Sensormodule mit Energie versorgt werden müssen, die für diese Steuerungsfunktion auch nötig sind. Demnach kann beispielsweise vorgesehen sein, über die Energieversorgungseinheit im Brems-Steuergerät den für die Bremsfunktion vorgesehen Drehzahlsensor aber gleichzeitig auch das Achsmodul des Fahrhöhensensors mit Energie zu versorgen, der für die Bremsfunktion an sich nicht benötigt wird. Alternativ kann dies auch vom Niveauregel-Steuergerät ausgehend erfolgen, das für eine Niveauregelung im Normalfall den Drehzahlsensor nicht benötigt.

Vorteilhafterweise können weitere Komponenten gespart werden, wenn diese gleichzeitige Energieversorgung der Sensormodule zumindest bereichsweise über lediglich eine Versorgungsleitung stattfindet. Ist das Steuergerät demnach am Chassis angeordnet, kann der Bereich zwischen Chassis und der Fahrzeugachse über lediglich eine Versorgungsleitung überbrückt werden. Dadurch können vorteilhafterweise Kosten gespart werden, da die Versorgungsleitung in diesem Bereich besonderen Belastungen ausgesetzt ist und daher eine besonders belastungsstabile und daher kostenintensive Versorgungsleitung zu wählen ist, beispielsweise eine Versorgungsleitung mit kupferummantelten Stahllitzen, um bei hoher Belastungsstabilität gleichzeitig eine dauerhaft gute Leitfähigkeit zu gewährleisten. Dadurch können häufige Verformungen der Versorgungsleitung aufgefangen werden, die durch die häufig auftretenden Bewegungen zwischen dem Chassis und der Fahrzeugachse insbesondere während des Fahrbetriebes des Fahrzeuges auftreten. Somit kann gewährleistet werden, dass sich die Leitfähigkeit der Versorgungsleitung in diesem Bereich über die Zeit nicht maßgeblich verändert und eine Energieübertragung vom Chassis auf die Fahrzeugachse auch über mehrere Verformungszyklen, vorzugsweise während der gesamten Lebensdauer des jeweiligen Sensormoduls, sichergestellt ist. Können gleichzeitig zwei oder mehrere der Sensormodule mit lediglich einer derartigen Versorgungsleitung mit Energie versorgt werden, können dadurch Kosten gespart werden.

Vorzugsweise ist diese Versorgungsleitung zweiadrig ausgeführt. Dadurch kann eine einfache Strom- und Spannungsübertragung gewährleistet werden, wobei vorteilhafterweise weiterhin erreicht werden kann, dass über diese Versorgungsleitung auch Signale übertragen werden können, die von einem der mindestens zwei Sensormodule zur weiteren Verarbeitung durch z.B. das erfindungsgemäße Steuergerät ausgegeben werden können. Die Signale werden hierbei mit einem bestimmten Datenprotokoll beispielsweise durch eine Modulierung eines über die Versorgungsleitung übertragenen Stroms, mit dem auch die Sensormodule mit Energie versorgt werden, erzeugt. Somit kann in einfacher Weise über ein und dieselbe Versorgungsleitung neben der Energieversorgung auch eine Datenübertragung gewährleistet werden, wodurch der Verkabelungsaufwand weiter reduziert sowie die Datenübertragung vereinfacht werden können.

Vorzugsweise sind die Sensormodule in dem Fall derartig ausgelegt, dass die von den Sensormodulen aufgenommene Energie, d.h. der zur Energieversorgung benötigte Strom, die Datenübertragung nicht wesentlich beeinflusst. Beispielsweise benötigt das Achsmodul des Fahrhöhensensors sehr viel weniger Strom als der Drehzahlsensor, so dass durch das Abgreifen des Stroms aus der Versorgungsleitung durch das Achsmodul des Fahrhöhensensors die vom Drehzahlsensor über die Versorgungsleitung ausgegebenen Drehzahl-Signale, die durch eine Modulierung des gleichzeitig übertragenen Stroms erzeugt werden, in ihrer Signalqualität nicht wesentlich beeinträchtigt werden und demnach ohne wesentliche Informationsverluste an das Steuergerät zur weiteren Verarbeitung übertragen werden können.

Vorzugsweise ist das Steuergerät weiterhin mit einer beispielsweise zentralen Energiequelle im Fahrzeug, z.B. einer Fahrzeugbatterie oder einer Lichtmaschine, verbunden, um eine Versorgung der Sensormodule über die Energieversorgungseinheit im Steuergerät zu ermöglichen, wobei die Energieversorgungseinheit dazu die von der zentralen Energiequelle bereitgestellte Energie entsprechend umwandelt bzw. anpasst, so dass diese zur Energieversorgung der Sensormodule an der Fahrzeugachse verwendet werden kann.

Das erfindungsgemäße Fahrzeug weist eine Sensoranordnung aus mindestens zwei Sensormodulen auf, die fest mit der Fahrzeugachse verbunden sind, wobei diese Sensormodule in der oben beschriebenen Weise von der Energieversorgungseinheit des Steuergerätes gleichzeitig mit Energie versorgt werden können. Jedes der Sensormodule weist dazu einen Versorgungsanschluss auf, über den die Energie in das entsprechende Sensormodul eingespeist werden kann. Vorzugsweise ist der Versorgungsanschluss dazu zumindest bereichsweise über die lediglich eine das Chassis mit der Fahrzeugachse verbindenden Versorgungsleitung mit der Energieversorgungseinheit energieleitend verbunden.

Die Einspeisung von Energie kann in unterschiedlichen Alternativen erfolgen, wobei die Versorgungsleitung in allen Alternativen zwischen einem mit dem Chassis fest verbundenen ersten Fixpunkt und einem mit der Fahrzeugachse fest verbundenen zweiten Fixpunkt verläuft. D.h. der erste Fixpunkt folgt im Wesentlichen der Bewegung des Chassis und der zweite Fixpunkt folgt der Bewegung der Fahrzeugachse.

Gemäß einer vorteilhaften Ausführungsform ist vorgesehen, dass ausgehend von dem zweiten Fixpunkt Sensormodul-Leitungen zu den jeweiligen Versorgungsanschlüssen an den mindestens zwei Sensormodulen führen. Die Sensormodul-Leitungen folgen demnach durch deren feste Verbindung zu den Versorgungsanschlüssen sowie dem zweiten Fixpunkt ebenfalls im Wesentlichen der Bewegung der Fahrzeugachse.

Dadurch kann in einfacher Weise eine energieleitende Verbindung an der Fahrzeugachse zwischen dem zweiten Fixpunkt und den jeweiligen Versorgungsanschlüssen an den mindestens zwei Sensormodulen ausgebildet werden, um eine Energieversorgung dieser sicherzustellen. In dieser Ausführungsform ist der zweite Fixpunkt abseits der Sensormodule angeordnet und als eine Art Verzweigungspunkt an der Fahrzeugachse ausgebildet, von dem die Energie über die Sensormodul-Leitungen auf die einzelnen Sensormodule verteilt wird.

Vorzugsweise kann der zweite Fixpunkt dazu in Form eines Steckverbinders ausgeführt sein. Die Versorgungsleitung und die jeweiligen Sensormodul-Leitungen zu den Versorgungsanschlüssen können am zweiten Fixpunkt in einfacher Weise zusammengesteckt werden. Dadurch ist eine einfache Nachrüstbarkeit oder Austauschbarkeit gegeben, da bei einer Erweiterung oder einem Austausch von einzelnen Sensormodulen die jeweilige Sensormodul-Leitung aus dem Steckverbinder entfernt bzw. eingesteckt werden kann.

Alternativ kann aber auch eine Lötverbindung am zweiten Fixpunkt vorgesehen sein, wobei die Versorgungsleitung und die Sensormodul-Leitungen zu den jeweiligen Sensormodulen am zweiten Fixpunkt verlötet sind.

Gemäß einer alternativen Ausführungsform kann der zweite Fixpunkt auch in bzw. an einem der Sensormodule, beispielsweise dem Drehzahlsensor, liegen und somit in dem einen Sensormodul integriert sein. Die Versorgungsleitung wird dazu direkt mit dem Versorgungsanschluss des jeweiligen Sensormoduls verbunden, so dass die Versorgungsleitung über den Verbindungspunkt mit dem Versorgungsanschluss und somit über das jeweilige Sensormodul ebenfalls mit der Fahrzeugachse fest verbunden ist.

Um in dieser Alternative auch weitere Sensormodule an der Fahrzeugachse mit Energie zu versorgen, weist das mit der Versorgungsleitung energieleitend verbundene Sensormodul einen Zweiganschluss auf, wobei der Zweiganschluss mit dem Versorgungsanschluss energieleitend verbunden ist. Die Versorgungsanschlüsse an den weiteren Sensormodulen an derselben Fahrzeugachse werden über die Sensormodul-Leitungen mit dem Zweiganschluss verbunden, um eine Energieversorgung des oder der anderen Sensormodule ausgehend von der Energieversorgungseinheit über die Versorgungsleitung und den zweiten Fixpunkt zu ermöglichen.

Somit kann in einfacher Weise auch über den in einem der Sensormodule integrierten zweiten Fixpunkt eine Weiterleitung von Energie auf die anderen Sensormodule gewährleistet werden, so dass ein bereits im Fahrzeug vorhandenes Sensormodul an der Fahrzeugachse, beispielsweise der Drehzahlsensor, der bereits über eine belastungsstabile Versorgungsleitung mit Energie versorgt wird, lediglich mit einem Zweiganschluss auszustatten ist, der beispielsweise als eine in den Versorgungsanschluss einsteckbare Verzweigung ausgeführt sein kann. Über diese können dann weitere an der Fahrzeugachse angeordnete Sensormodule, beispielsweise das Achsmodul des Fahrhöhensensors oder ein weiterer Drehzahlsensor am gegenüberliegenden Rad oder ein Beschleunigungssensor mit Energie versorgt werden. Somit können in einfacher Weise zwei unterschiedliche Sensorarten an einer Fahrzeugachse über lediglich eine Versorgungsleitung mit Energie versorgt werden.

Vorteilhafterweise können der Zweiganschluss und der Versorgungsanschluss am jeweiligen Sensormodul dazu auch zusammengefasst sein, so dass die Versorgungsleitung und die Sensormodul-Leitungen an einer Position in bzw. aus dem jeweiligen Sensormodul verlaufen und eine Nachrüstbarkeit erleichtert wird.

Die Erfindung wird im Folgenden anhand der beiliegenden Zeichnung erläutert. Es zeigen:
- Fig. 1: eine schematische Ansicht eines Fahrzeuges;
- Fig. 2: eine erste Ausführungsform einer erfindungsgemäßen Sensoranordnung; und
- Fig. 3: eine zweite Ausführungsform einer erfindungsgemäßen Sensoranordnung.

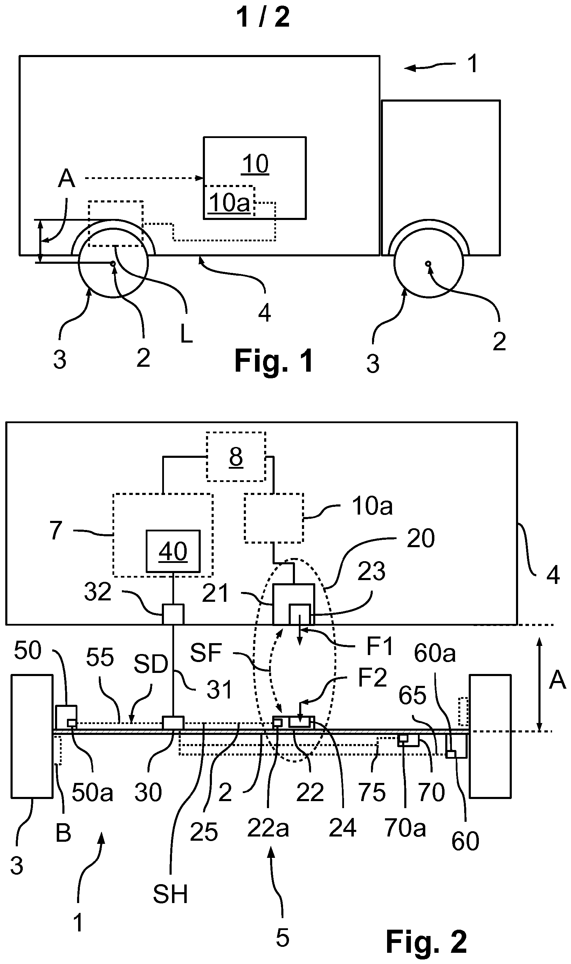

Gemäß Figur 1 ist schematisch ein Fahrzeug 1, beispielsweise ein Nutzfahrzeug, mit zwei Fahrzeugachsen 2, an denen jeweils Räder 3 angeordnet sind, dargestellt. Ein Chassis 4 des Fahrzeuges 1 ist gegenüber den Fahrzeugachsen 2 bzw. gegenüber den Rädern 3 über ein Niveau-Regelsystem 10 höhenverstellbar, wobei das Niveau-Regelsystem 10 beispielsweise in Abhängigkeit einer Beladung und/oder von aktuellen Fahrbedingungen gesteuert von einem Niveauregel-Steuergerät 10a über eine Luftfederanlage L einen Abstand A zwischen dem Chassis 4 und der jeweiligen Fahrzeugachse 2 oder eine diesen Abstand A charakterisierende Größe einregeln kann, indem das Chassis 4 gegenüber der Fahrzeugachse 2 angehoben oder absenkt wird.

Der Abstand A kann von einem Fahrhöhensensor 20 gemessen werden, der gemäß Fig. 2 ein chassisfestes Chassismodul 21 und ein achsfestes Achsmodul 22 aufweist, zwischen denen berührungslos der Abstand A oder eine diesen Abstand A charakterisierende Größe ermittelt werden kann, wobei der Abstand vom Niveau-Regelsystem 10 im Niveauregel-Steuergerät 10a als Regelgröße verwendet wird. Im Rahmen der Erfindung wird hierbei unter achsfest verstanden, dass eine feste Verbindung mit der Fahrzeugachse 2 ggf. auch über weitere ebenfalls mit der Fahrzeugachse 2 fest verbundene Komponenten besteht, d. h. es wird der Bewegung der Fahrzeugachse 3 unmittelbar gefolgt. Unter chassisfest wird in entsprechender Weise verstanden, dass eine feste Verbindung mit dem Chassis 4 ggf. auch über weitere ebenfalls mit dem Chassis 4 fest verbundene Komponenten besteht, d.h. es wird der Bewegung des Chassis 4 unmittelbar gefolgt.

Der Fahrhöhensensor 20 ist gemäß dieser Ausführungsform als RF-Fahrhöhensensor (RF, radio frequency) ausgeführt, wobei dazu im Chassismodul 21 eine Sendespule 23 und im Achsmodul 22 eine Empfängerspule 24 angeordnet ist. An der Sendespule 23 wird ein niederfrequentes Magnetfeld mit einer Sende-Feldstärke F1 erzeugt. Die Empfängerspule 24 misst, wie hoch eine am Achsmodul 22 noch wirkende Empfänger-Feldstärke F2 ist. Aus dem Unterschied zwischen der Sende-Feldstärke F1 und der Empfänger-Feldstärke F2 lässt sich der Abstand A zwischen beiden Spulen 23, 24 bzw. zwischen dem Chassismodul 21 und dem Achsmodul 22 des Fahrhöhensensors 20 herleiten.

Die Informationsübertragung von dem Achsmodul 22 auf das Chassismodul 21 und umgekehrt erfolgt über eine hochfrequente bidirektionale Funkverbindung zwischen beiden Modulen 21, 22. Um diese auszubilden, ist am Chassismodul 21 und am Achsmodul 22 jeweils eine nicht dargestellte Funkübertragungseinrichtung angeordnet, die jeweils ein hochfrequentes Funksignal SF mit vorab verarbeiteten Daten, z.B. den Feldstärken F1, F2 oder dem Abstand A, senden und empfangen können.

Hierbei kann beispielsweise der auf dem Achsmodul 22 aus der Sende-Feldstärke F1 und der Empfänger-Feldstärke F2 ermittelte Abstand A über das Funksignal SF an das Chassismodul 21 übertragen werden. Zum Ermitteln des Abstandes A auf dem Achsmodul 22 kann die Sende-Feldstärke F1 wiederum vom Chassismodul 21 vorab über die hochfrequente Funkverbindung auf das Achsmodul 22 übertragen werden. Alternativ kann über das Funksignal SF auch lediglich die vom Achsmodul 22 gemessene Empfänger-Feldstärke F2 auf das Chassismodul 21 übertragen werden und auf diesem oder von dem Niveau-Steuergerät 10a im Niveau-Regelsystem 10 entsprechend weiterverarbeitet werden.

Alternativ können die Funktionen der jeweiligen Module 21, 22 auch vertauscht sein, d. h. die Sendespule 23 ist im Achsmodul 22 angeordnet und die Empfängerspule 24 im Chassismodul 21. Die Übermittlung und Verarbeitung der Daten erfolgt in entsprechender Weise.

Um eine Datenverarbeitung und Datenübermittlung sowie ein Betreiben der Empfängerspule 24 zum Messen der Empfänger-Feldstärke F2 bzw. der Sendespule 23 zum Erzeugen der Sende-Feldstärke SF1 im an der Fahrzeugachse 2 angeordneten Achsmodul 22 zu ermöglichen, ist dieses mit Energie zu versorgen.

Gemäß einer ersten Ausführungsform, die in Fig. 2 dargestellt ist, erfolgt die Energieversorgung über eine Achsmodul-Leitung 25, die zwischen einem Achsmodul-Versorgungsanschluss 22a an dem Achsmodul 22 des Fahrhöhensensors 20 und einem achsfesten zweiten Fixpunkt 30 verläuft, der einer Versorgungsleitung 31 zugeordnet ist. Die Achsmodul-Leitung 25 verbindet somit das achsfeste Sensormodul des Fahrhöhensensors 20 - das Achsmodul 22 - mit dem achsfesten zweiten Fixpunkt 30 der Versorgungsleitung 31.

Vom zweiten Fixpunkt 30 verläuft die Versorgungsleitung 31 zu einem chassisfesten ersten Fixpunkt 32, der mit einer ebenfalls chassisfesten Energieversorgungseinheit 40 verbunden ist. Somit wird zwischen dem Chassis 4 und der Fahrzeugachse 2 ein energieleitender Übergang geschaffen, der eine Übertragung von Energie aus der chassifesten Energieversorgungseinheit 40 über den chassisfesten ersten Fixpunkt 32 auf den achsfesten zweiten Fixpunkt 30 und von da ausgehend insbesondere zu dem achsfesten Achsmodul 22 erlaubt.

Die Versorgungsleitung 31 ist zwischen dem zweiten Fixpunkt 30 und dem ersten Fixpunkt 32 derartig ausgeführt, dass während der Fahrt häufig auftretende Bewegungen, z.B. Vibrationen, zwischen dem Chassis 4 und der jeweiligen Fahrzeugachse 2 und eine dadurch wiederholt auftretende Verformung der Versorgungsleitung 31 nicht zu einem Brechen dieser führen, d.h. es ist eine belastungsstabile Versorgungsleitung 31 vorgesehen, die auch über eine große Zeitdauer trotz wiederholter Verformungen ihre Leitfähigkeit im Wesentlichen beibehält. Die Versorgungsleitung 31 kann dazu beispielsweise kupferummantelte Stahllitzen als energieleitende Adern aufweisen.

Gemäß der Ausführungsform in Fig. 2 ist an der Fahrzeugachse 2 als ein weiteres achsfestes Sensormodul ein aktiver Drehzahlsensor 50 mit einem Drehzahlsensor-Versorgungsanschluss 50a vorgesehen, über den der Drehzahlsensor 50 mit Energie von der chassisfesten Energieversorgungseinheit 40 versorgt werden kann. Um eine Energieversorgung zu gewährleisten, ist zwischen dem Drehzahlsensor-Versorgungsanschluss 50a und dem achsfesten zweiten Fixpunkt 30 der Versorgungsleitung 31 eine Drehzahlsensor-Leitung 55 angeschlossen, die für eine energieleitende Verbindung zwischen den beiden achsfesten Punkten 30, 50a sorgt.

Der Drehzahlsensor 50 misst beispielsweise über einen achsfesten Hall-Sensor die Drehung eines an dem benachbarten Rad 3 angeordneten Impulsrades, um darüber das Drehverhalten des Rades 3 zu erfassen. Ein das Drehverhalten des Rades 3 charakterisierendes Drehzahl-Signal SD kann vom Drehzahlsensor 50 über die Drehzahlsensor-Leitung 55 und die Versorgungsleitung 31 zur weiteren Verarbeitung ausgegeben werden, beispielsweise für eine von einem Brems-Steuergerät 7 am Chassis 4 koordinierte Bremsschlupfregelung oder Antriebsschlupfregelung im Fahrzeug 1, aufgrund derer Bremsen B an den Rädern 3 des Fahrzeuges 1 angesteuert werden.

Die Energieversorgungseinheit 40 versorgt somit sowohl den Drehzahlsensor 50 als auch den mit der Fahrzeugachse 2 fest verbundenen Teil des Fahrhöhensensors 20, d.h. das Achsmodul 22, mit Energie, so dass eine gemeinsame Energieversorgungseinheit 40 ausgebildet wird. Die Energieversorgungseinheit 40 zur Energieversorgung der beiden mit der Fahrzeugachse 2 fest verbundenen Sensormodule 50, 22 ist gemäß Fig. 2 Bestandteil des Brems-Steuergerätes 7. Das Brems-Steuergerät 7 wird wie auch das Niveauregel-Steuergerät 10a von einer übergeordneten Energiequelle 8, z.B. einer Fahrzeugbatterie oder einer Lichtmaschine des Fahrzeuges 1, mit Energie versorgt. Alternativ kann die Energieversorgungseinheit 40 auch Bestandteil des Niveauregel-Steuergerätes 10a sein, um von diesem ausgehend für eine Energieversorgung der beiden achsfesten Sensormodule 50, 22 zu sorgen.

Der achsfeste zweite Fixpunkt 30 dient also gemäß dieser Ausführungsform als zentraler Verzweigungspunkt, über den die von der Energieversorgungseinheit 40 über die belastungsstabile Versorgungsleitung 31 auf diesen Verzweigungspunkt auf der Fahrzeugachse 2 übertragene Energie über die entsprechenden Sensormodul-Leitungen 25, 55 an die jeweiligen Versorgungsanschlüsse 22a, 50a der beiden achsfesten Sensormodule 22, 50 verteilt wird. Die Energieversorgungseinheit 40 sowie die Versorgungsleitung 31 dienen somit in diesem Fall der gleichzeitigen Energieversorgung von zwei mit der Fahrzeugachse 2 fest verbundenen Sensormodulen 22, 55, die einer Sensoranordnung 5 zugeordnet sind.

Ergänzend kann in der Sensoranordnung 5 als ein weiteres achsfestes Sensormodul ein Beschleunigungssensor 70 mit einem Beschleunigungssensor-Versorgungsanschluss 70a vorgesehen sein, der über eine Beschleunigungssensor-Leitung 75 mit Energie versorgt wird, wobei die Beschleunigungssensor-Leitung 75 dazu ebenfalls an den achsfesten zweiten Fixpunkt 30 elektrisch angekoppelt ist, um aus derselben Energieversorgungseinheit 40 wie die anderen achsfesten Sensormodule 50, 22 mit Energie versorgt zu werden.

Ergänzend kann an dem gegenüberliegenden Rad 3 der Fahrzeugachse 2 als weiteres achsfestes Sensormodul der Sensoranordnung 5 ein zweiter Drehzahlsensor 60 mit einem zweiten Drehzahlsensor-Versorgungsanschluss 60a vorgesehen sein, der über eine zweite Drehzahlsensor-Leitung 65 an den achsfesten zweiten Fixpunkt 30 angeschlossen ist, um darüber eine Energieversorgung ebenfalls aus der Energieversorgungseinheit 40 zu gewährleisten. Dadurch ist auch für den zweiten Drehzahlsensor 60 keine weitere belastungsstabile Versorgungsleitung 31 vom Brems-Steuergerät 7 am Chassis 4 zur Fahrzeugachse 2 zu verlegen.

Der achsfeste zweite Fixpunkt 30 kann beispielsweise als ein Steckverbinder ausgeführt sein, in den die Versorgungsleitung 31, die Achsmodul-Leitung 25 und die Drehzahlsensor-Leitung 55 und ggf. die weiteren Sensormodul-Leitungen 65, 75 zu den weiteren Versorgungsanschlüssen 60a, 70a eingesteckt sind. Alternativ kann die Versorgungsleitung 31 mit den jeweiligen Sensormodul-Leitungen 25, 55, 65, 75 am achsfesten zweiten Fixpunkt 30 auch verlötet sein oder durch eine andere Verbindungsart miteinander verbunden sein, die eine Verteilung der Energie ermöglicht.

Die Versorgungsleitung 31 und die entsprechenden Sensormodul-Leitungen 25, 55, 65, 75 zu den jeweiligen Versorgungsanschlüssen 22a, 50a, 60a, 70a der achsfesten Sensormodule 22, 50, 60, 70 sind hierbei vorzugsweise zweiadrig, um im einfachsten Fall einen Anschluss an eine zweipolige Energieversorgungseinheit 40 und damit eine Übertragung einer Spannung bzw. eines Stromes zu ermöglichen. Gleichzeitig kann in der zweiadrigen Ausführung beispielsweise durch eine Modulation des Stromes über ein entsprechendes Datenprotokoll oder eine Power-Line-Communication (PLC) gleichzeitig neben der Energieversorgung auch eine Datenübertragung stattfinden.

In dieser Weise kann beispielsweise das vom jeweiligen achsfesten Drehzahlsensor 50, 60 ausgegebene Drehzahl-Signal SD zur weiteren Verarbeitung an das chassisfeste Brems-Steuergerät 7 übertragen werden. Ergänzend können auch die vom achsfesten Achsmodul 22 verarbeiteten Daten, d.h. beispielsweise die gemessene Empfänger-Feldstärke F2 und/oder der daraus abgeleitete Abstand A, die normalerweise über das Funksignal SF drahtlos auf das Chassismodul 21 rückübertragen werden, in einem Fahrhöhen-Signal SH drahtgebunden über die Achsmodul-Leitung 25 und die Versorgungsleitung 31 entsprechend moduliert auf das Chassis 4 übertragen werden. Dadurch kann das Ausbilden eines hochfrequenten Rückkanals zwischen dem Achsmodul 22 und dem Chassismodul 21 entfallen. Das Fahrhöhen-Signal SH kann dann z.B. vom Brems-Steuergerät 7 über ein Netzwerk, beispielsweise einen CAN-Bus, oder über eine Direktverbindung auf das Niveauregel-Steuergerät 10a zur weiteren Verarbeitung und Regelung übertragen werden.

Eine derartige Modulation des Stromes hat dabei keinen Einfluss auf die Energieversorgung der jeweiligen achsfesten Sensormodule 22, 50, 60, 70. Andererseits benötigt das von der Energieversorgungseinheit 40 im Brems-Steuergerät 7 mit Energie versorgte Achsmodul 22 des Fahrhöhensensors 20 im Vergleich zu beispielsweise den Drehzahlsensoren 50, 60 derartig wenig Energie, dass eine Beeinflussung der Qualität des strommoduliert übertragenen Drehzahl-Signals SD durch die Abzweigung von Energie an das Achsmodul 22 nicht zu erwarten ist. Daher können bei der Strommodulierung auch weiterhin eine gute Signalqualität erreicht werden und gleichzeitig der Verkabelungsaufwand weiter minimiert werden.

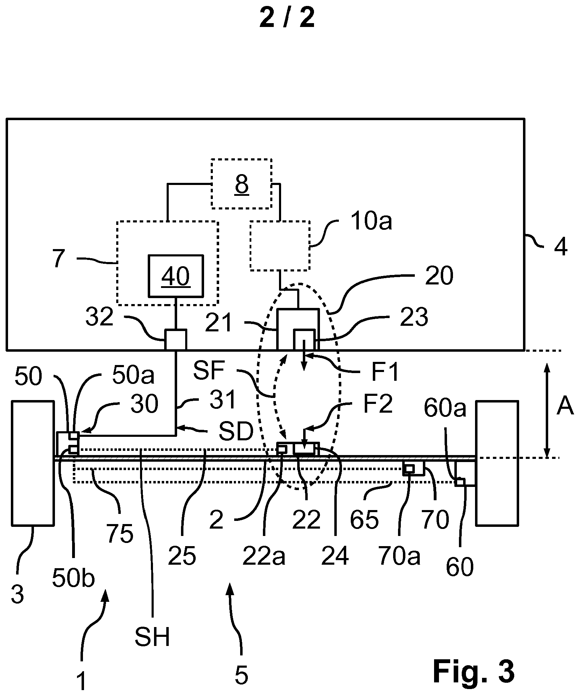

Gemäß einer alternativen in Fig. 3 dargestellten Ausführungsform liegt der achsfeste zweite Fixpunkt 30 am Drehzahlsensor 50. Die belastungsstabile Versorgungsleitung 31 ist demnach direkt zum Drehzahlsensor-Versorgungsanschluss 50a am achsfesten Drehzahlsensor 50 geführt und damit fest verbunden, um diesen mit Energie zu versorgen und gleichzeitig eine strommodulierte Übertragung von Daten, insbesondere des Drehzahl-Signals SD, zu ermöglichen. In einen am Drehzahlsensor 50 angeordneten Zweiganschluss 50b sind die Achsmodul-Leitung 25 zum Achsmodul 22 sowie die weiteren Sensormodul-Leitungen 65, 75 zu den weiteren achsfesten Sensormodulen 60, 70 aufgenommen. Im Drehzahlsensor 50 ist der Drehzahlsensor-Versorgungsanschluss 50a mit dem Zweiganschluss 50b energieleitend verbunden, um eine energieleitende Verbindung zwischen dem achsfesten zweiten Fixpunkt 30 der Versorgungsleitung 31 und den achsfesten Sensormodulen 22, 60, 70 bzw. den jeweiligen Versorgungsanschlüssen 22a, 60a, 70a zu gewährleisten und auf diese Weise eine Energieversorgung sicherzustellen. Weiterhin kann auch darüber eine Datenübertragung, beispielsweise über das Fahrhöhen-Signal SH, durch eine Modulierung des Stromes erreicht werden.

Alternativ kann die Versorgungsleitung 31 aber auch zu einem der anderen achsfesten Sensormodule 22, 60, 70 geführt werden, so dass der achsfeste zweite Fixpunkt 30 an einem dieser Sensormodule 22, 60, 70 liegt. In entsprechender Weise erfolgt dann die Verteilung der Energie auf die einzelnen Sensormodule 22, 50, 60, 70 über den Zweiganschluss und die Sensormodul-Leitungen wie oben beschrieben.

Die Ausführungsformen gemäß Fig. 2 und Fig. 3 haben somit gemeinsam, dass über eine einzige belastungsstabile Versorgungsleitung 31 Energie vom Chassis 4, d.h. von dem chassisfesten ersten Fixpunkt 32, der mit der gemeinsamen Energieversorgungseinheit 40 im Brems-Steuergerät 7 verbunden ist, auf den achsfesten zweiten Fixpunkt 30 übertragen wird, und vom achsfesten zweiten Fixpunkt 30 ausgehend eine Energieversorgung von mehreren achsfesten Sensormodulen 22, 50, 60, 70 der Sensoranordnung 5 erfolgt.

### Bezugszeichenliste (Bestandteil der Beschreibung)

- 1: Fahrzeug
- 2: Fahrzeugachse
- 3: Rad
- 4: Chassis
- 5: Sensoranordnung
- 7: Brems-Steuergerät
- 8: Energiequelle
- 10: Niveau-Regelsystem
- 10a: Niveauregel-Steuergerät
- 20: Fahrhöhensensor
- 21: Chassismodul
- 22: Achsmodul
- 22a: Achsmodul-Versorgungsanschluss
- 23: Sendespule
- 24: Empfängerspule
- 25: Achsmodul-Leitung
- 30: zweiter Fixpunkt
- 31: Versorgungsleitung
- 32: erster Fixpunkt
- 40: Energieversorgungseinheit
- 50: Drehzahlsensor
- 50a: Drehzahlsensor-Versorgungsanschluss
- 50b: Zweiganschluss
- 55: Drehzahlsensor-Leitung
- 60: zweiter Drehzahlsensor
- 60a: zweiter Drehzahlsensor-Versorgungsanschluss
- 65: zweite Drehzahlsensor-Leitung
- 70: Beschleunigungssensor
- 70a: Beschleunigungssensor-Versorgunganschluss
- 75: Beschleunigungssensor-Leitung
- A: Abstand Chassis-Fahrzeugachse
- F1: Sende-Feldstärke
- F2: Empfänger-Feldstärke
- SD: Drehzahl-Signal
- SF: hochfrequentes Funksignal
- SH: Fahrhöhen-Signal

## Patentansprüche

1. Fahrzeug (1), insbesondere Nutzfahrzeug, mit Fahrzeugachsen (2), einem Chassis (4), einer Sensoranordnung (5) und einem eine Energieversorgungseinheit (40) aufweisenden und mit dem Chassis (4) fest verbundenen Steuergerät (7, 10a),
wobei die Sensoranordnung (5) mindestens zwei mit der Fahrzeugachse (2) des Fahrzeuges (1) fest verbundene Sensormodule (22, 50, 60, 70) mit jeweils einem Versorgungsanschluss (22a, 50a, 60a, 70a) zum Einspeisen von Energie in das jeweilige Sensormodul (22, 50, 60, 70) aufweist,
wobei der Versorgungsanschluss (50a) eines der mindestens zwei Sensormodule (50) mit der Energieversorgungseinheit (40) des Steuergerätes (7, 10a) energieleitend verbunden ist zum Versorgen des einen mit der Fahrzeugachse (2) fest verbundenen Sensormoduls (50) mit Energie,
und
der Versorgungsanschluss (22a, 60a, 70a) eines weiteren der mindestens zwei mit der Fahrzeugachse (2) fest verbundenen Sensormodule (22, 60, 70) ebenfalls mit der Energieversorgungseinheit (40) des Steuergerätes (7, 10a) energieleitend verbunden ist zum gleichzeitigen Energieversorgen der mindestens zwei mit der Fahrzeugachse (2) fest verbundenen Sensormodule (22, 50, 60, 70) über dieselbe Energieversorgungseinheit (40) des Steuergerätes (7, 10a), **dadurch gekennzeichnet, dass** die Versorgungsanschlüsse (22a, 50a, 60a, 70a) der mindestens zwei mit der Fahrzeugachse (2) fest verbundenen Sensormodule (22, 50, 60, 70) über dieselbe das Chassis (4) mit der Fahrzeugachse (2) verbindende Versorgungsleitung (31) mit der Energieversorgungseinheit (40) des Steuergerätes (7, 10a) energieleitend verbunden sind, wobei die Versorgungsleitung (31) dazu einen mit dem Chassis (4) fest verbundenen ersten Fixpunkt (32) mit einem mit der Fahrzeugachse (2) fest verbundenen zweiten Fixpunkt (30) elektrisch leitend verbindet.

2. Fahrzeug (1) nach Anspruch 1, **dadurch gekennzeichnet, dass** mindestens ein der mindestens zwei Sensormodule ein Drehzahlsensor (50, 60) zur Messung eines Drehverhaltens eines Rades (3) an der Fahrzeugachse (2) oder ein Achsmodul (22) eines Fahrhöhensensors (20) zur Messung einer einen Abstand (A) zwischen dem Chassis (4) und der Fahrzeugachse (2) des Fahrzeuges (1) charakterisierenden Größe oder ein Beschleunigungssensor (70) ist.

3. Fahrzeug (1) nach Anspruch 2, **dadurch gekennzeichnet, dass** ein mit Energie über die Energieversorgungseinheit (40) zu versorgendes Sensormodul der Drehzahlsensor (50, 60) und ein weiteres der mindestens zwei mit Energie über die Energieversorgungseinheit (40) zu versorgenden Sensormodule das Achsmodul (22) des Fahrhöhensensors (20) ist.

4. Fahrzeug (1) nach Anspruch 2 oder 3, **dadurch gekennzeichnet, dass** der Fahrhöhensensor (20) als ein berührungsloser Fahrhöhensensor (21, 22, 23, 24), insbesondere als ein RF-Fahrhöhensensor, ausgeführt ist, wobei der berührungslose Fahrhöhensensor (21, 22, 23, 24) ein mit dem Chassis (4) fest verbundenes Chassismodul (21) und das mit der Fahrzeugachse (2) fest verbundene Achsmodul (22) aufweist, das über die Energieversorgungseinheit (40) des Steuergerätes (7, 10a) mit Energie versorgt ist.

5. Fahrzeug (1) nach Anspruch 1, **dadurch gekennzeichnet, dass** der zweite Fixpunkt (30) über Sensormodul-Leitungen (25, 55, 65, 75) mit den jeweiligen Versorgungsanschlüssen (22a, 50a, 60a, 70a) an den mindestens zwei Sensormodulen (22, 50, 60, 70) energieleitend verbunden ist.

6. Fahrzeug (1) nach Anspruch 5, **dadurch gekennzeichnet, dass** der zweite Fixpunkt (30) als eine Steckverbindung ausgeführt ist, wobei die Versorgungsleitung (31) und die jeweiligen Sensormodul-Leitungen (25, 55, 65, 75) am zweiten Fixpunkt (30) in die Steckverbindung eingesteckt sind.

7. Fahrzeug (1) nach Anspruch 5, **dadurch gekennzeichnet, dass** der zweite Fixpunkt (30) als eine Lötverbindung ausgeführt ist, wobei die Versorgungsleitung (31) und die jeweiligen Sensormodul-Leitungen (25, 55, 65, 75) am zweiten Fixpunkt (30) verlötet sind.

8. Fahrzeug (1) nach Anspruch 1, **dadurch gekennzeichnet, dass** der zweite Fixpunkt (30) an einem der mindestens zwei Sensormodule (50) liegt, wobei dazu die Versorgungsleitung (31) direkt mit dem Versorgungsanschluss (50a) des einen Sensormoduls (50) verbunden ist zum Versorgen des einen Sensormoduls (50) mit Energie.

9. Fahrzeug (1) nach Anspruch 8, **dadurch gekennzeichnet, dass** das eine Sensormodul (50) einen Zweiganschluss (50b) aufweist, wobei der Zweiganschluss (50b) mit dem Versorgungsanschluss (50a) energieleitend verbunden ist und die Versorgungsanschlüsse (22a, 60a, 70a) an den weiteren der mindestens zwei Sensormodule (22, 60, 70) der Sensoranordnung (5) mit dem Zweiganschluss (50b) über eine Sensormodul-Leitung (25, 65, 75) energieleitend verbunden ist.

10. Fahrzeug (1) nach Anspruch 9, **dadurch gekennzeichnet, dass** der Zweiganschluss (50b) und der Versorgungsanschluss (50a) an dem einen Sensormodul (50) zusammengefasst sind.

11. Fahrzeug (1) nach einem der Ansprüche 1 bis 10, **dadurch gekennzeichnet, dass** die Versorgungsleitung (31) zweiadrig ausgeführt ist zur zweipoligen Strom- bzw. Spannungsübertragung an die mindestens zwei Sensormodule (22, 50, 60, 70),
wobei über die zweiadrige Versorgungsleitung (31) weiterhin von mindestens einem der mindestens zwei Sensormodule (22, 50, 60) ausgegebene Signale (SD, SH) übertragen werden können, wobei die Signale (SD, SH) durch eine Modulierung eines über die Versorgungsleitung (31) übertragenen Stroms erzeugbar sind und der Strom gleichzeitig zur Energieversorgung der mindestens zwei Sensormodule (22, 50, 60, 70) dient und die von der Energieversorgungseinheit (40) des Steuergerätes (7, 10a) mit Energie zu versorgenden mindestens zwei Sensormodule (22, 50, 60, 70) derartig ausgelegt sind, dass der von diesen mindestens zwei Sensormodulen (22, 50, 60, 70) im Rahmen der Energieversorgung aufgenommene Strom das durch die Modulierung des Stromes erzeugte Signal (SD, SH) nicht beeinflussen.

## Claims

1. Vehicle (1), in particular a commercial vehicle, with vehicle axles (2), chassis (4), sensor assembly (5) and power supply unit (40) as well as with a control unit (7, 10a), which is firmly attached to the chassis (4),
wherein the sensor assembly (5) has at least two sensor modules (22, 50, 60, 70) firmly connected with the vehicle axle (2) of the vehicle (1) with, respectively, one power supply connection (22a, 50a, 60a, 70a) for power supply of the corresponding sensor module (22, 50, 60, 70),
wherein the power supply connection (50a) of one of the at least two sensor modules (50) is connected in a power supply mode with the power supply unit (40) of the control unit (7, 10a) for power supply of the sensor module (50) firmly connected with the axle of the vehicle (2),
and
the power supply connection (22a, 60a, 70a) of another of the at least two sensor modules (22, 60, 70), which are firmly connected with the vehicle axle (2), is also connected in a power supply mode with the power supply unit (40) of the control unit (7, 10a) for the simultaneous power supply of the at least two sensor modules (22, 50, 60, 70) firmly connected with the vehicle axle (2) through the same power supply unit (40) of the control unit (7, 10a), **characterized in that** the power supply connections (22a, 50a, 60a, 70a) of the at least two of the sensor modules (22, 50, 60, 70) firmly connected with the vehicle axle (2) through the same power supply line (31), which is connecting the chassis (4) with the vehicle axle (2), are connected in a power supply mode with the power supply unit (40) of the control unit (7, 10a), wherein to this purpose the power supply line (31) connects in electric power supply mode one first fixed point (32) that is firmly connected with the chassis (4) with a second fixed point (30) that is firmly connected with the vehicle axle (2).

2. Vehicle (1) according to Claim 1, **characterized in that** at least one of the at least two sensor modules is a speed sensor (50, 60) for measuring the rotary behavior of a wheel (3) on the vehicle axle (2) or an axle module (22) of a ride height sensor (20) for measuring a value that characterizes the distance (A) between the chassis (4) and the vehicle axle (2) of the vehicle (1), or an acceleration sensor (70) .

3. Vehicle (1) according to Claim 2, **characterized in that** one sensor module of the speed sensor (50, 60) that is to supply with energy through the power supply unit (40) and another one of the at least two sensor modules that is to supply with energy through the power supply unit (40) is the axle module (22) of the ride height sensor (20).

4. Vehicle (1) according to Claim 2 or 3, **characterized in that** the ride height sensor (20) is designed as a contactless ride height sensor (21, 22, 23, 24), in particular as an RF ride height sensor, wherein the contactless ride height sensor (21, 22, 23, 24) has one chassis module (21) firmly connected with the chassis (4) and the axle module (22) firmly connected with the vehicle axle (2), which is supplied with energy through the power supply unit (40) of the control unit (7, 10a).

5. Vehicle (1) according to Claim 1, **characterized in that** the second fixed point (30) is connected in a power supply mode to the at least two sensor modules (22, 50, 60, 70) through the sensor module lines (25, 55, 65, 75) by the respective power supply connection (22a, 50a, 60a, 70a).

6. Vehicle (1) according to Claim 5, **characterized in that** the second fixed point (30) is designed as a plug-in connection, wherein the power supply line (31) and the corresponding sensor module lines (25, 55, 65, 75) are plugged in the plug-in connection of the second fixed point (30).

7. Vehicle (1) according to Claim 5, **characterized in that** the second fixed point (30) is designed as a solder connection, wherein the power supply line (31) and the corresponding sensor module lines (25, 55, 65, 75) are soldered up on the second fixed point (30).

8. Vehicle (1) according to Claim 1, **characterized in that** the second fixed point (30) lies on the at least two sensor modules (50), wherein to this purpose the power supply line (31) is directly connected with the supply connection (50a) of the one sensor module (50) for supplying the one sensor module (50) with power.

9. Vehicle (1) according to Claim 8, **characterized in that** one sensor module (50) has a branch connection (50b), wherein the branch connection (50b) is connected in a power supply mode with the power supply connection (50a) and the power supply connections (22a, 60a, 70a) are connected in a power supply mode to the further at least two sensor modules (22, 60, 70) of the sensor assembly (5) with the branch connection (50b) through a sensor module line (25, 65, 75).

10. Vehicle (1) according to Claim 9, **characterized in that** the branch connection (50b) and the power supply connection (50a) are fixed together on the one sensor module (50) .

11. Vehicle (1) according to one of the claims 1 to 10, **characterized in that** the power supply line (31) is designed in a two-core form for the two-pole current or power transmission to the at least two sensor modules (22, 50, 60, 70),
wherein the signal (SD, SH) can be transmitted further on through the two-pole power supply line (31) from at least one of the at least two sensor modules (22, 50, 60), wherein the signals (SD, SH) can be generated through a modulation of a current transmitted through the power supply line (31) and the current serves at the same time for the energy supply of at least two sensor modules (22, 50, 60, 70) and the at least two sensor modules (22, 50, 60, 70), which are to be supplied with energy by the power supply unit (40) of the control unit (7, 10a), are mounted in such a way that the current, which is received by these at least two sensor modules (22, 50, 60, 70) within the framework of the power supply, does not influence the signal (SD, SH) generated by the modulation of the current.

## Revendications

1. Véhicule (1), en particulier véhicule utilitaire, avec des essieux de véhicule (2), un châssis (4), un ensemble de capteurs (5) et un appareil de commande (7, 10a) présentant une unité d'alimentation en énergie (40) et relié fixement au châssis (4),
dans lequel l'ensemble de capteurs (5) présente au moins deux modules capteurs (22, 50, 60, 70), reliés fixement à l'essieu de véhicule (2) du véhicule (1), avec respectivement un raccordement d'alimentation (22a, 50a, 60a, 70a) servant à injecter de l'énergie dans le module capteur (22, 50, 60, 70) respectif,
dans lequel le raccordement d'alimentation (50a) d'un des au moins deux modules capteurs (50) est relié à l'unité d'alimentation en énergie (40) de l'appareil de commande (7, 10a) de manière à conduire de l'énergie pour alimenter l'un des modules capteurs (50) reliés fixement à l'essieu de véhicule (2) en énergie,
et
le raccordement d'alimentation (22a, 60a, 70a) d'un autre des au moins deux modules capteurs (22, 60, 70) reliés fixement à l'essieu de véhicule (2) est également relié à l'unité d'alimentation en énergie (40) de l'appareil de commande (7, 10a) de manière à conduire l'énergie pour l'alimentation simultanée en énergie des au moins deux modules capteurs (22, 50, 60, 70) reliés fixement à l'essieu de véhicule (2) par l'intermédiaire de la même unité d'alimentation en énergie (40) de l'appareil de commande (7, 10a), **caractérisé en ce que** les raccordements d'alimentation (22a, 50a, 60a, 70a) des au moins deux modules capteurs (22, 50, 60, 70) reliés fixement à l'essieu de véhicule (2) sont reliés par l'intermédiaire de la même conduite d'alimentation (31) reliant le châssis (4) à l'essieu de véhicule (2) à l'unité d'alimentation en énergie (40) de l'appareil de commande (7, 10a) de manière à conduire l'énergie, dans lequel la conduite d'alimentation (31) relie à cet effet de manière électro-conductrice un premier point fixe (32) relié fixement au châssis (4) à un deuxième point fixe (30) relié fixement à l'essieu de véhicule (2).

2. Véhicule (1) selon la revendication 1, **caractérisé en ce qu'**au moins un des au moins deux modules capteurs est un capteur de vitesse de rotation (50, 60) servant à mesurer un comportement en rotation d'une roue (3) sur l'essieu de véhicule (2) ou un module d'essieu (22) d'un capteur de hauteur de roulement (20) servant à mesurer une grandeur caractérisant un écart (A) entre le châssis (4) et l'essieu de véhicule (2) du véhicule (1) ou un capteur d'accélération (70) .

3. Véhicule (1) selon la revendication 2, **caractérisé en ce qu'**un module capteur à alimenter en énergie par l'intermédiaire de l'unité d'alimentation en énergie (40) est le capteur de vitesse de rotation (50, 60) et un autre des au moins deux modules capteurs à alimenter en énergie par l'intermédiaire de l'unité d'alimentation en énergie (40) est le module d'essieu (22) du capteur de hauteur de roulement (20) .

4. Véhicule (1) selon la revendication 2 ou 3, **caractérisé en ce que** le capteur de hauteur de roulement (20) est réalisé sous la forme d'un capteur de hauteur de roulement sans contact (21, 22, 23, 24), en particulier sous la forme d'un capteur de hauteur de roulement RF, dans lequel le capteur de hauteur de roulement sans contact (21, 22, 23, 24) présente un module de châssis (21) relié fixement au châssis (4) et le module d'essieu (22) relié fixement à l'essieu de véhicule (2), qui est alimenté en énergie par l'intermédiaire de l'unité d'alimentation en énergie (40) de l'appareil de commande (7, 10a).

5. Véhicule (1) selon la revendication 1, **caractérisé en ce que** le deuxième point fixe (30) est relié aux raccordements d'alimentation (22a, 50a, 60a, 70a) respectifs sur les au moins deux modules capteurs (22, 50, 60, 70) par l'intermédiaire de conduites de modules capteurs (25, 55, 65, 75) de manière à conduire l'énergie.

6. Véhicule (1) selon la revendication 5, **caractérisé en ce que** le deuxième point fixe (30) est réalisé sous la forme d'une connexion à fiches, dans lequel la conduite d'alimentation (31) et les conduites de modules capteurs (25, 55, 65, 75) respectives sont enfichées dans la connexion à fiches au niveau du deuxième point fixe (30).

7. Véhicule (1) selon la revendication 5, **caractérisé en ce que** le deuxième point fixe (30) est réalisé sous la forme d'une liaison brasée, dans lequel la conduite d'alimentation (31) et les conduites de modules capteurs (25, 55, 65, 75) respectives sont brasées au niveau du deuxième point fixe (30) .

8. Véhicule (1) selon la revendication 1, **caractérisé en ce que** le deuxième point fixe (30) se situe sur un des au moins deux modules capteurs (50), dans lequel, à cet effet, la conduite d'alimentation (31) est reliée directement au raccordement d'alimentation (50a) d'un des modules capteurs (50) pour alimenter un des modules capteurs (50) en énergie.

9. Véhicule (1) selon la revendication 8, **caractérisé en ce que** l'un des modules capteurs (50) présente un raccordement de dérivation (50b), dans lequel le raccordement de dérivation (50b) est relié au raccordement d'alimentation (50a) de manière à conduire l'énergie et les raccordements d'alimentation (22a, 60a, 70a) sur les autres des au moins deux modules capteurs (22, 60, 70) de l'ensemble de capteurs (5) sont reliés au raccordement de dérivation (50b) par l'intermédiaire d'une conduite de modules capteurs (25, 65, 75) de manière à conduire l'énergie.

10. Véhicule (1) selon la revendication 9, **caractérisé en ce que** le raccordement de dérivation (50b) et le raccordement d'alimentation (50a) sont réunis au niveau de l'un des modules capteurs (50).

11. Véhicule (1) selon l'une quelconque des revendications 1 à 10, **caractérisé en ce que** la conduite d'alimentation (31) est réalisée de manière bifilaire pour la transmission bipolaire de courant ou de tension sur les au moins deux modules capteurs (22, 50, 60, 70),
dans lequel des signaux (SD, SH) émis par au moins un des au moins deux modules capteurs (22, 50, 60) peuvent en outre être transmis par l'intermédiaire de la conduite d'alimentation (31) bifilaire, dans lequel les signaux (SD, SH) peuvent être produits par une modulation d'un courant transmis par l'intermédiaire de la conduite d'alimentation (31) et le courant sert à alimenter simultanément en énergie les au moins deux modules capteurs (22, 50, 60, 70) et les au moins deux modules capteurs (22, 50, 60, 70) devant être alimentés en énergie par l'unité d'alimentation en énergie (40) de l'appareil de commande (7, 10a) sont conçus de telle sorte que le courant reçu par ces au moins deux modules capteurs (22, 50, 60, 70) dans le cadre de l'alimentation en énergie n'influence pas le signal (SD, SH) produit.
